# FASCICULE DE BREVET EUROPEEN

(11) **EP 3 489 929 B1**
(45) Date de publication et mention de la délivrance du brevet: **21.02.2024**
(21) Numéro de dépôt: 18207722.2
(22) Date de dépôt: 22.11.2018
(51) Int. Cl.: G08G 5/00, H04B 7/185, G05D 1/00

(54) **SYSTÈME ÉLECTRONIQUE DE TÉLÉ-PILOTAGE DE DRONES, PROCÉDÉ ET PROGRAMME D'ORDINATEUR ASSOCIÉS**
ELEKTRONISCHES SYSTEM ZUR FERNSTEUERUNG VON DROHNEN, ENTSPRECHENDES VERFAHREN UND COMPUTERPROGRAMM
ELECTRONIC SYSTEM FOR REMOTE CONTROL OF DRONES, ASSOCIATED METHOD AND COMPUTER PROGRAM

(30) Priorité: 24.11.2017 FR 1701232
(43) Date de publication de la demande: 29.05.2019
(73) Titulaire: Thales, 92400 Courbevoie (FR)
(72) Inventeur: CANTALOUBE, Christian, 33700 MERIGNAC (FR)
(74) Mandataire: Lavoix

(56) Documents cités:
- WO-A1-2016/154944
- US-A1- 2016 240 087
- US-A1- 2017 103 659
- US-A1- 2017 154 536
- US-B1- 9 588 516

## Description

La présente invention se situe dans le domaine des aéronefs pilotés ou contrôlés à distance, encore appelés drones ou UAV (pour « Unmanned Aircraft Vehicle » en anglais) ou RPA (pour « Remotely Piloted Aircraft » en anglais).

Les drones peuvent être commandés par des consignes directes sur les moteurs et gouvernes, ou par des ordres de type « vecteur » (cap ou route + altitude ou pente), ou par une consigne de trajectoire complexe, typiquement une consigne de trajectoire composée de points GPS reliés par des segments droits ou arcs de cercle. Une partie du vol peut s'effectuer hors de la vue du télé-pilote, qui le suivra sur une station de pilotage au sol comprenant un système électronique de télé-pilotage d'un drone.

L'invention concerne un tel système électronique de télé-pilotage de drones, comprenant :
- une première interface de télécommunication pour établir une liaison de télécommunication avec un drone ;
- une seconde interface de réception de commandes de télé-pilotage du drone ;
- une première base de données comprenant des données de définition de limite(s) de zone de vol autorisée ;
- une unité de traitement adaptée pour transmettre au drone, via ladite première interface, des commandes de télé-pilotage du drone reçues via la seconde interface et adaptée pour recevoir, via la première interface, des informations de situation courante du drone en provenance du drone indiquant au moins sa position géographique.

Le vol se déroule sous la responsabilité du télé-pilote qui doit assurer le respect de la réglementation et la sécurité des personnes et des biens survolés.

En particulier, il doit veiller à toujours respecter les zones de vol autorisées et ne pas pénétrer dans des zones interdites. Les délimitations des zones interdites peuvent comprendre des coordonnées de hauteur et/ou des coordonnées horizontales à ne pas franchir.

Il est connu, pour contribuer au respect des zones de vol autorisées et interdites, d'ajouter au drone un dispositif embarqué de gardiennage virtuel (en anglais « geocaging module » ou « geofencing module ») adapté pour déclencher la chute du drone en cas de dépassement des limites autorisées. Ce type de dispositif indépendant est particulièrement utile pour contrer des défauts de l'électronique embarquée du système de navigation/guidage/commandes de vol, voire des blocages de gouverne, défauts qui rendent le drone non dirigeable et empêchent le télé-pilote de corriger même s'il a détecté le défaut.

Toutefois, même lorsqu'un drone est équipé d'un tel dispositif de gardiennage virtuel additionnel, la détection par ce dernier d'un franchissement de limite autorisée est dommageable car elle s'accompagne du déclenchement de la chute du drone et donc de la perte probable du drone et ce même s'il s'agit d'une simple erreur de commande ou programmation par le télé-pilote, ou d'une réaction de correction trop tardive, alors que l'ensemble du système fonctionne bien par ailleurs.

Il existe ainsi un besoin de contribuer au respect par un drone des limites de zones de vol autorisées.

A cet effet, suivant un premier aspect, l'invention propose un système électronique de télé-pilotage d'un drone selon la revendication 1.

L'invention permet ainsi de sécuriser et corriger automatiquement le vol d'un drone relativement aux zones de vol interdites et/ou autorisées. Un système électronique de télé-pilotage d'un drone permet ainsi de mettre en oeuvre un gardiennage virtuel préventif, sans avoir à modifier le bloc de pilotage embarqué du drone et compatible d'un dispositif de gardiennage virtuel embarqué dans le drone le cas échéant.

Dans des modes de réalisation, le système électronique de télé-pilotage d'un drone suivant l'invention est selon l'une des revendications 2 à 4.

Suivant un deuxième aspect, la présente invention propose un procédé de télé-pilotage de drones selon la revendication 5.

Dans des modes réalisation, le procédé de télé-pilotage de drones est selon la revendication 6 ou 7.

Suivant un troisième aspect, la présente invention propose un programme d'ordinateur selon la revendication 8.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'une plate-forme de télé-pilotage dans un mode de réalisation de l'invention ;
- la figure 2 est une vue d'une trajectoire de drone dans un mode de réalisation de l'invention ;
- la figure 3 est un organigramme d'étapes mises en oeuvre dans un mode de réalisation de l'invention.

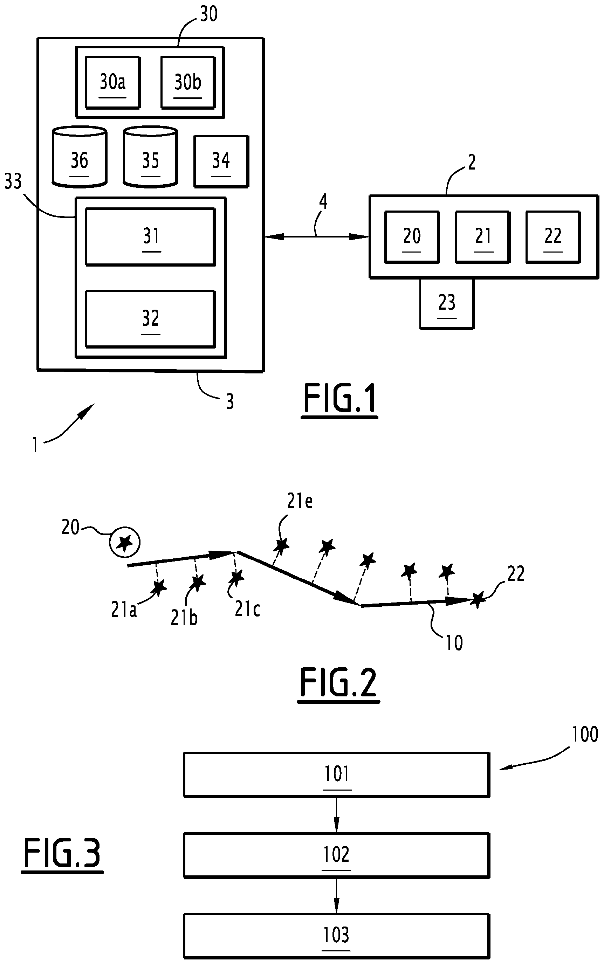

La figure 1 représente une plate-forme 1 de télé-pilotage de drones comprenant un drone 2 et un système électronique de télé-pilotage d'un drone 3 dans un mode de réalisation, qui se trouve par exemple au sein d'une station au sol RPS (en anglais « Remote Pilot Station »).

Le drone 2 et le système électronique de télé-pilotage d'un drone 3 sont aptes à communiquer entre eux via une liaison de télécommunication sans fil 4, par exemple dans le cas considéré, une liaison radiofréquence bidirectionnelle. Un protocole de communication permettant l'échange d'informations de contrôle et de commande, souvent appelées informations C2, par exemple le standard ouvert MAVLINK est utilisé sur cette liaison.

Le drone 2 comporte une interface de télécommunication sans fil 20, un bloc de pilotage 21 et un bloc de géolocalisation 22. Il comprend en outre, par exemple, un dispositif de geocaging 23.

Bien entendu, le drone 2 comporte en outre les autres éléments usuels d'un drone, non représentés en figure 1 : notamment des actionneurs, des gouvernes et moteurs permettant au drone de se déplacer en vol.

Le drone 2 peut comprendre en outre une ou des caméras etc.

L'interface de télécommunication sans fil 20 est adaptée pour mettre en oeuvre la liaison de télécommunication sans fil 4 avec le système 3 et échanger sur cette liaison 4 des données avec le système électronique de télé-pilotage 3. Elle comprend par exemple un émetteur/récepteur radiofréquence et une antenne radiofréquence.

Le bloc de pilotage 21 est adapté pour commander les moteurs et gouvernes par des ordres de pilotage qu'il leur fournit à partir de consignes préalablement enregistrées ou reçues par la liaison de télécommunication 4.

Le bloc de pilotage 21 commande les moteurs et gouvernes selon un mode de consigne qui est :
- soit un mode de consigne par plan de vol (mode 1), sur la base d'une liste de coordonnées géographiques (longitude, latitude, altitude) de points de vol reliés par des segments droits ou arcs de cercle ; un tel plan de vol est typiquement enregistré par le bloc de pilotage 21 préalablement au vol du drone, puis il est mis à jour par des modifications de plan de vol transmis depuis le système électronique de télé-pilotage d'un drone 3 via la liaison de télécommunication 4 ;
- soit un mode de consigne directe (mode 2), sur la base de consignes directement destinées aux moteurs et gouvernes (ex : piquer/cabrer, inclinaison droite/gauche, en anglais « Pitch & Roll orders ») transmises régulièrement au bloc de pilotage 21 depuis le système électronique de télé-pilotage d'un drone 3 via la liaison de télécommunication 4 et tel que les consignes dernièrement reçues en provenance du système 3 sont appliquées tant que de nouvelles consignes ne sont pas reçues ;
- soit un mode de commande de type « vecteur » (mode 3), sur la base d'un vecteur comprenant un cap à suivre (ou une route) et une altitude (ou une pente), transmis régulièrement au bloc de pilotage 21 après actualisation, depuis le système électronique de télé-pilotage d'un drone 3 via la liaison de télécommunication 4 et tel que le cap à suivre (ou une route) et l'altitude (ou une pente) dernièrement reçus en provenance du système 3 sont suivis tant qu'un nouveau vecteur de commande n'est pas reçu.

Dans un mode de réalisation, le bloc de pilotage 21 est adapté pour transmettre régulièrement (par exemple, plusieurs fois par seconde), via l'interface de télécommunication 20, au système électronique de télé-pilotage 3, l'état courant du drone en termes de position, altitude, attitude, cap, vitesse, accélérations, état de santé.

Dans le mode de réalisation considéré, le bloc de géolocalisation 22 est adapté pour déterminer la position géographique du drone 2. Il comprend un capteur de position, par exemple de type GPS, et aussi des capteurs accéléromètres, gyromètres, baromètre, magnétomètre, le tout adapté pour déterminer les coordonnées géographiques du drone, par exemple sous la forme latitude, longitude, altitude et d'autres paramètres de vol tels que attitude, cap, vitesse, accélérations,. Le bloc de géolocalisation 22 est adapté pour transmettre régulièrement (par exemple, plusieurs fois par seconde) ces informations au bloc de pilotage 21 qui les utilise pour le guidage et pilotage, et éventuellement, via l'interface de télécommunication 20, au système électronique de télé-pilotage 3, si cette retransmission n'est pas assurée par le bloc 21.

Le dispositif de geocaging 23 est adapté pour lui aussi déterminer la localisation géographique du drone 2, par exemple de manière indépendante du bloc de géolocalisation 22. Il comprend par exemple son propre ensemble de capteurs: capteur de position, par exemple de type GPS, et aussi des capteurs accéléromètres, gyromètres, baromètre, magnétomètre. Il comprend en outre une mémoire stockant les coordonnées géographiques des zones de vol autorisées et/ou interdites. Le dispositif de geocaging 23 est adapté pour déterminer, en fonction de la localisation géographique courante qu'il a déterminée pour le drone et des coordonnées géographiques des zones de vol autorisées et/ou interdites, si le drone se trouve endehors de toute zone de vol autorisée ou à l'intérieur d'une zone interdite, et pour dans un tel cas, déclencher une procédure d'urgence pour mettre fin à l'infraction, telle que couper l'alimentation du moteur, bloquer les gouvernes et/ou déclencher la sortie d'un parachute.

Dans un mode de réalisation le dispositif de geocaging 23 est également adapté pour, via l'interface de télécommunication 20, transmettre régulièrement (par exemple, plusieurs fois par minute) au système électronique de télé-pilotage 3 les paramètres dernièrement déterminés définissant la situation courante du drone.

Le système électronique de télé-pilotage d'un drone 3 comprend un dispositif d'interface homme-machine 30, une unité électronique de traitement 33, une interface de télécommunication sans fil 34, une base de données 35 du terrain et des obstacles fixes et une base de données 36 des zones autorisées et/ou interdites.

Le dispositif d'interface homme-machine 30 est configuré pour permettre d'interagir avec un télé-pilote et comprend une interface de visualisation 30a, tactile ou non, et une interface de saisie 30b.

L'interface de visualisation 30a est adaptée pour permettre au télé-pilote de visualiser des données, notamment des images, fournie(s) par l'unité de traitement 33 et comprend par exemple un écran, tactile ou non, ou un casque de réalité virtuelle (pour un champ de vision augmenté à 360 degrés selon la direction du regard du télé-pilote).

L'interface de saisie 30b est adaptée pour recueillir les ordres du télé-pilote (par exemple elle comprend des manettes, boutons, claviers, souris, micro et outil de reconnaissance vocale pour sélectionner des champs affichés sur l'écran 30a ...).

L'interface de télécommunication sans fil 34 est adaptée pour mettre en oeuvre la liaison de télécommunication sans fil 4 avec le drone 2 et échanger avec ce dernier sur cette liaison 4 des données. Elle comprend par exemple un émetteur/récepteur radiofréquence et une antenne radiofréquence.

La base de données 35 du terrain et des obstacles fixes définit un modèle numérique d'élévation 3D de l'ensemble de l'étendue (relief, obstacles, éléments remarquables : ville, rivière, route, ...) que le drone est susceptible de survoler.

La base de données 36 des zones autorisées et/ou interdites comprend les coordonnées géographiques délimitant les zones de vol autorisées et/ou interdites ; les limites peuvent prendre la forme de hauteurs minimales ou maximales à ne pas franchir et/ou de surfaces définies en termes de longitude et latitude.

Dans un mode de réalisation, le drone 2 comporte en outre d'autres capteurs, par exemple vitesse air, incidence, dérapage, température, et les données captées sont également transmises régulièrement au système électronique de télé-pilotage 3 via l'interface de télécommunication 20.

L'unité électronique de traitement 33 comprend dans le cas considéré un bloc électronique de geocaging préventif 31 et un bloc électronique de commande et contrôle sol 32.

Dans le cas de la figure 1, l'unité électronique de traitement 33 comprend par exemple un processeur et une mémoire associée au processeur. Le bloc de geocaging préventif 31 et le bloc électronique de commande et contrôle sol 32 sont par exemple réalisés sous forme de logiciels respectifs exécutables par le processeur et stockées dans la mémoire sous forme d'instructions logicielles.

En variante non représentée, le bloc de geocaging préventif 31 et le bloc électronique de commande et contrôle sol 32 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit).*

En autre variante non représentée, le bloc de geocaging préventif 31 et le bloc électronique de commande et contrôle sol 32 sont réalisés chacun par des logiciels fonctionnant sur des ordinateurs différents, processeurs et/ou écrans.

Le bloc de commande et contrôle sol 32 comprend par exemple un générateur graphique d'images adapté pour synthétiser une ou des images de navigation, par exemple de situation horizontale et de situation verticale, de l'environnement courant du drone en fonction des données de la base de données 35 du terrain et des obstacles fixes et en fonction au moins des données en provenance du drone 2 dernièrement reçues via l'interface de télécommunication sans fil 34 et comprenant la localisation géographique courante du drone 2 déterminée par le bloc de géolocalisation 22 et les paramètres définissant la situation courante du drone déterminés par le dispositif de geocaging 23.

Le bloc de commande et contrôle sol 32 est adapté pour fournir ces images de navigation au dispositif d'interface homme-machine 30 pour affichage de ces images sur l'interface de visualisation 30a.

Le bloc de geocaging préventif 31 est adapté pour recevoir, via l'interface de télécommunication sans fil 34, les données transmises par le drone 2 comprenant la localisation géographique courante du drone 2 et d'autres paramètres (attitudes, vitesses, accélérations, cap, hauteur barométrique) déterminés par le bloc de géolocalisation 22 et les paramètres équivalents déterminés par le dispositif de geocaging 23,. Ces données sont d'une part transmises au bloc de commande et contrôle sol 32.

D'autre part, le bloc de geocaging préventif 31 est déterminé pour détecter si le drone 2 a franchi ou risque de franchir une limite de zone de vol autorisée, en fonction des coordonnées géographiques de la base de données 36 des zones autorisées et/ou interdites et en fonction :
- d'au moins une consigne de pilotage fournie par le télé-pilote via le dispositif d'interface homme-machine 30,
- et/ou de la localisation géographique courante du drone 2 déterminée par le bloc de géolocalisation 22,
- et/ou de paramètres définissant la situation courante du drone déterminés par le dispositif de geocaging 23, des informations relatives au vent, à l'état courant des moteurs et gouvernes etc.

Dans un mode de réalisation, le bloc de geocaging préventif 31 est adapté pour, si un risque de franchissement de limite de zone de vol autorisée vient effectivement d'être détecté, déclencher, via le dispositif d'interface homme-machine 30, une alerte, visuelle et/ou sonore, destinée à prévenir le télé-pilote du problème détecté. On notera que cette alerte peut être très anticipée notamment dans le cas où elle tient compte de la consigne de pilotage fournie par le télé-pilote et de sa projection dans le temps. Elle sera par exemple graduelle en fonction du temps restant jusqu'au franchissement potentiel : avertissement de risque si la commande était exécutée sans modification jusqu'à son terme, puis demande de réaction immédiate lorsque le franchissement est prédictible dans un temps très rapproché (de l'ordre de la minute ou moins)

Dans un mode de réalisation, le bloc de geocaging préventif 31 est adapté pour, si un (risque de) franchissement de limite de zone de vol autorisée vient effectivement d'être détecté, déterminer une consigne de correction de pilotage du drone 2 pour empêcher que le franchissement de limite de zone de vol autorisée n'ait lieu (ou pour revenir en zone de vol autorisée) : par exemple un virage sur la gauche ou la droite, une mise en palier etc.

Le bloc de geocaging préventif 31 est adapté pour transmettre, via l'interface de télécommunication sans fil 34, au drone 2, la consigne de correction déterminée.

Dans un mode de réalisation, le bloc de geocaging préventif 31 est adapté pour, préalablement à la transmission de la consignede correction au drone 2, proposer la consigne de correction déterminée au télé-pilote, qui peut la valider ou non, via le dispositif d'interface homme-machine 30. Dans un tel mode de réalisation, le bloc de geocaging préventif 31 est adapté pour transmettre au drone 2 la consigne de correction déterminée seulement si cette dernière a été validée par le télé-pilote.

Selon l'invention, le bloc de geocaging préventif 31 est adapté pour comparer la localisation géographique du drone 2 déterminée par le bloc de géolocalisation 22 et quand elle est disponible, la localisation géographique du drone 2 déterminée sur la base des paramètres transmis par le dispositif de geocaging 23, pour détecter un écart supérieur à un seuil déterminé entre lesdites localisations géographiques comparées, pour déclencher une alerte destinée au télé-pilote lorsqu'un tel écart supérieur à un seuil déterminé a été détecté et pour, optionnellement, déterminer une instruction de correction de pilotage du drone 2 destinée à faire atterrir ce dernier au plus tôt, comme précédemment transmise au drone 2 directement ou après validation par le télé-pilote.

Dans un mode de réalisation, le bloc de geocaging préventif 31 est adapté pour sélectivement, suivant le mode de commande utilisé par le bloc de pilotage 21 du drone 2 :
- dans le cas d'un mode de commande par plan de vol (mode 1), vérifier que le plan de vol est déjà compatible des zones autorisées avant qu'il ne soit enregistré dans le drone 2, en fonction des données de la base de données des zones autorisées et/ou interdites 36 ; dans le cas où le plan de vol n'est pas compatible, alors le bloc de geocaging préventif 31 est adapté pour empêcher le chargement du plan de vol dans le drone 2. Dans un mode de réalisation, le bloc de geocaging préventif 31 est adapté pour alors déterminer une instruction d'attente se substituant au plan de vol à charger (par exemple, si le vol est en cours, un vol stationnaire ou un cercle restant dans la zone autorisée) et pour la transmettre au drone 2 via l'interface de télécommunication 34. Dans un mode de réalisation, le bloc de geocaging préventif 31 est adapté pour alerter le télépilote, et optionnellement pour déterminer une modification du plan de vol le rendant compatible que le bloc de geocaging préventif 31 transmettra au drone 2 dès validation par le télé-pilote ;
- dans le cas d'un mode de commande directe (mode 2), le bloc de geocaging préventif 31 est adapté pour, en fonction de la position courante du drone, et des ordres courants commandant le drone 2, déterminer une extrapolation, i.e. calculer quand et où le drone 2 atteindra une limite de la zone de vol autorisée et pour, en fonction de cette extrapolation, informer éventuellement le télépilote via l'IHM 30. Lorsqu'un risque de dépassement des limites est avéré (à une dizaine de secondes ou une dizaine de mètres près par exemple), le bloc de geocaging préventif 31 est adapté pour remplacer les ordres de pilotage fournis par le télé-pilote via le dispositif d'interface homme-machine 30, par des ordres plus adéquats (virage ou mise en stationnaire, mise en palier...) et pour la transmettre au drone 2 via l'interface de télécommunication 34 ; L'instant de déclenchement est calculé par le bloc de geocaging préventif 31 en fonction de la manoeuvre possible et des conditions courantes du vol, vent par exemple, afin de garantir le non dépassement : ajout à la position instantanée de la meilleure trajectoire corrective réalisable et vérification de la limite par rapport à cette extrapolation.
- dans le cas d'un mode de commande par vecteur (mode 3), le bloc de geocaging préventif 31 est adapté pour en fonction de la position courante du drone, et du vecteur de pilotage courant commandant le drone 2 et/ou en fonction du vecteur de pilotage dernièrement transmis par le télé-pilote via l'interface homme-machine 30 qui est à transmettre au drone 2, déterminer une extrapolation, i.e. calculer quand et où le drone 2 atteindra une limite de la zone de vol autorisée et pour, en fonction de cette extrapolation, informer éventuellement le télé-pilote via l'IHM 30, calculer et proposer un nouveau vecteur plus compatible. Lorsque le risque de dépasser la limite est très proche, le bloc de geocaging préventif 31 est par exemple adapté pour transmettre au drone 2 un telle consigne de nouveau vecteur ou une instruction de mise en circuit d'attente compatible de ces limites à partir de la position courante. L'instant de déclenchement est calculé par le bloc de geocaging préventif 31 en fonction de la manoeuvre possible et des conditions courantes du vol, vent par exemple, afin de garantir le non dépassement : ajout à la position instantanée de la meilleure trajectoire corrective réalisable et vérification de la limite par rapport à cette extrapolation.

On notera que ces dispositions permettent aussi d'empêcher d'initier un décollage lorsque les conditions de compatibilité de zone ne sont pas réunies : position initiale ou plan de vol non compatible par exemple.

Par ailleurs, les autorités de navigation aérienne civile demandent aussi généralement que, en cas de perte confirmée de la liaison de télécommunication, souvent appelée liaison C2 avec le drone, celui-ci se pose automatiquement le plus tôt possible en un point de repli au sol, pour ne pas rester en vol non contrôlé.

Un dispositif de gardiennage virtuel tel que le dispositif optionnel de geocaging 23 peut continuer à fonctionner même quand la liaison de télécommunication 4 de contrôle et commande est coupée, garantissant la non excursion au-delà de de la zone de vol autorisée, mais la plupart des pilotes automatiques ou contrôleurs de vol à bord des drones ont un comportement automatique de retour à un point donné ajustable « home » en cas de coupure de liaison. Par exemple, en référence à la figure 2, le point « home » 20 a été défini pour la trajectoire 10 du drone jusqu'à la destination 22. Ce point peut être mal positionné, en zone non autorisée, ou encore peut donner lieu, pour le rejoindre, au franchissement par le drone de zones interdites, ce qui provoquera dans un tel cas une chute déclenchée via le module de geocaging de bord 23 si présent et une perte probable de la machine.

Ainsi, dans un mode de réalisation de l'invention, le drone 2 est adapté pour détecter une coupure de la liaison de télécommunication 4 entre le système 3 et le drone 2 et pour dès détection d'une telle coupure, déclencher une procédure d'atterrissage d'urgence en un point d'atterrissage d'urgence (optionnellement conformément à un trajet d'atterrissage d'urgence) dont les coordonnées sont stockées dans un emplacement dit d'atterrissage d'urgence d'une mémoire du bloc de pilotage 21.

Dans un mode de réalisation de l'invention, le bloc de geocaging préventif 31 est adapté pour actualiser automatiquement via la liaison 4 une localisation d'atterrissage d'urgence du drone en fonction de données de terrain et/ou d'obstacles de la deuxième base, des données de la base de zones de vol autorisées et/ou interdites, de la localisation géographique du drone indiquée par des informations de situation courante et d'un écart maximum fixé, en temps ou distance, de rejointe par le drone de la localisation d'atterrissage d'urgence.

Par exemple, le bloc de geocaging préventif 31 est adapté pour rechercher un point d'atterrissage d'urgence (et un trajet de diversion pour le rejoindre le plus approprié) en respectant les zones de vol autorisées et/ou interdites telles que définies par la base de données 36, par petite portion du trajet nominal à effectuer par le drone 2 en fonction d'au moins les instructions de pilotage transmises au drone par le système 3, par exemple toutes les m minutes ou k kilomètres de trajet, et pour transmettre au drone via l'interface de télécommunication 34, les coordonnées du point d'atterrissage d'urgence le plus adapté pour le, tronçon en cours. Ainsi, les coordonnées des points d'atterrissage d'urgence 21a, 21b, 21c, 21e ... sont successivement définies et transmises. Ces points, et optionnellement les trajets de diversion associés, sont déterminés dans un mode de réalisation en tenant compte en outre de la nature du terrain et des obstacles définis par la base de données 35 et/ou des performances du drone 2 et/ou de la position courante du drone, pour viser le meilleur atterrissage, et en respectant les zones et hauteurs de vol autorisées. Ainsi, le drone 2 aura toujours, en cas de coupure de liaison, un point (et optionnellement un trajet de diversion) à appliquer défini au mieux depuis au plus tard m minutes ou k km (par exemple m= 3 et k = 3). Le drone 2 est adapté pour, dès réception via l'interface de télécommunication 20, des coordonnées actualisées du point d'atterrissage d'urgence et optionnellement du trajet de diversion correspondant, le(s) stocker dans l'emplacement mémoire d'atterrissage d'urgence du bloc de pilotage 21.

La mise à jour régulière de ce point d'atterrissage d'urgence lors du vol permet de sécuriser le trajet du drone et de pérenniser son utilisation.

Dans un mode de réalisation optionnel, un dispositif d'authentification, par exemple par clés asymétriques (PKI) est ajouté sur la liaison 4 afin de garantir que le drone 2 ne peut pas être commandé à partir d'une station RPS qui ne comporterait pas de dispositif de geocaging préventif.

En référence à la figure 3, les étapes d'un procédé de télé-pilotage d'un drone dans un mode de mise en oeuvre de l'invention mis en oeuvre à l'aide du système électronique de télé-pilotage 3 sont maintenant décrites.

Dans une étape 101, le bloc de geocaging préventif 31 reçoit les données régulièrement transmises par le drone 2 comprenant la localisation géographique courante du drone 2 déterminée par le bloc de géolocalisation 22 et les paramètres définissant la situation courante du drone déterminés par le dispositif de geocaging 23, les informations relatives au vent etc. Le bloc de geocaging préventif 31 reçoit par ailleurs via l'interface homme-machine 30 des instructions de pilotage établies conformément au mode de pilotage du drone 2 (mode 1, 2 ou 3) telles qu'établies par le télé-pilote et que ce dernier souhaite transmettre au drone 2 via l'interface de télécommunication 34.

Le bloc de geocaging préventif 31, dans une étape 102, détermine s'il y a risque de franchissement (par exemple, franchissement potentiel à moins de 3 min de vol ou 3 km de distance) ou franchissement de limite de zone de vol autorisée en fonction de :
- des données de la base de données 36 des zones autorisées et/ou interdites et
- des données reçues en provenance du drone à l'étape 101 et/ou d'instructions de télé-pilotage reçues à l'étape 101.

Le bloc de geocaging préventif 31 actualise en outre automatiquement les coordonnées du point d'atterrissage d'urgence (et optionnellement un trajet de diversion pour chaque point) par segment de trajet et le transmet au drone 2. Le drone 2, dès réception, stocke ces informations actualisées du point d'atterrissage d'urgence et optionnellement du trajet de diversion correspondant, à l'emplacement mémoire d'atterrissage d'urgence du bloc de pilotage 21. Ainsi ultérieurement, sur détection d'une rupture de la liaison 4, le drone 2 se dirigera vers ce point (en suivant le trajet de diversion, si mémorisé) défini au mieux depuis au plus m minutes ou k km auparavant.

Dans une étape 103, s'il a été déterminé à l'étape 102 qu'il y a un risque avéré de franchissement ou un franchissement par le drone 2, le bloc de geocaging préventif 31 détermine une instruction de pilotage destinée au drone pour empêcher le franchissement de limite de zone de vol qu'il transmet au drone, éventuellement après validation par le télé-pilote et/ou bloque la transmission au drone d'une instruction de télé-pilotage reçue pour empêcher le franchissement de limite de zone de vol auquel aurait conduit la mise en oeuvre par le drone d'une telle instruction de télé-pilotage comme établi à l'étape 102.

La présente invention permet ainsi de sécuriser le trajet d'un drone 2 par rapport aux zones interdites de vol.

On notera que dans l'exemple décrit, le drone 2 est équipé d'un dispositif de geocaging. Toutefois l'invention peut être mise en oeuvre vis-à-vis de drone non équipé d'un tel dispositif.

Dans le mode de réalisation décrit, trois modes de pilotage différents étaient considérés. Bien évidemment, un nombre différent de modes de pilotage supérieur ou égal à 1 peut être considéré.

## Revendications

1. Système électronique de télé-pilotage (3) de drones (2), comprenant :
- une première interface de télécommunication (34) pour établir une liaison de télécommunication (4) avec un drone (2) ;
- une seconde interface (30) de réception de commandes de télé-pilotage du drone ;
- une première base de données (36) comprenant des données de définition de limite(s) de zone de vol autorisée ;
- une unité de traitement (33) adaptée pour transmettre au drone, via ladite première interface, des commandes de télé-pilotage du drone reçues via la seconde interface et adaptée pour recevoir, via la première interface, des informations de situation courante du drone en provenance du drone indiquant au moins sa localisation géographique ; l'unité de traitement étant adaptée pour détecter un risque de franchissement de limite de zone de vol autorisée en fonction de données de définition de limite(s) de zone de vol autorisée extraites de la première base de données et d'au moins un premier élément parmi des informations de situation courante reçues et une première commande de télé-pilotage reçue via la seconde interface et pour, suite à ladite détection, effectuer au moins une première opération parmi un ensemble d'opérations comprenant :
- déclenchement d'une alarme en fonction de la détermination d'une situation de franchissement de limite, ladite situation de franchissement de limite étant déterminée, en fonction de ladite première commande de pilotage et d'une extrapolation dans le temps d'un pilotage conforme à ladite première commande;
- le blocage de la transmission au drone de la première commande de télé-pilotage reçue via la seconde interface pour empêcher le franchissement de limite de zone de vol,
**caractérisé en ce que** l'unité de traitement (33) est adaptée pour extraire des informations de situation courante du drone en provenance du drone, une première localisation géographique du drone issue d'un premier dispositif de localisation du drone et une deuxième localisation géographique du drone issue d'un deuxième dispositif de localisation d'un outil de gardiennage virtuel embarqué dans le drone, pour comparer les première et deuxième localisations géographiques, pour détecter un écart supérieur à un seuil déterminé entre lesdites localisations géographiques comparées, l'unité de traitement (33) comprenant en outre l'outil de gardiennage virtuel (31) et un bloc électronique de commande et contrôle sol (32), l'outil de gardiennage virtuel (31) étant adapté pour déclencher une alerte destinée au télé-pilote lorsqu'un tel écart supérieur à un seuil déterminé a été détecté.

2. Système électronique de télé-pilotage (3) de drones selon la revendication 1, dans lequel l'unité de traitement est adaptée pour, suite à ladite détection, déterminer une deuxième commande de télé-pilotage destinée au drone pour empêcher le franchissement de limite de zone de vol ;
et transmettre automatiquement de la deuxième commande au drone.

3. Système électronique de télé-pilotage (3) de drones selon la revendication 1 ou 2, dans lequel l'unité de traitement (33) est adaptée pour sélectionner un mode parmi plusieurs mode de fonctionnement, la détermination de la deuxième commande de télé-pilotage comprenant selon le mode sélectionné au moins la détermination de l'un des éléments parmi l'ensemble d'éléments comprenant les coordonnées géographiques d'un futur point de passage du drone, une consigne de fonctionnement de moteurs et/ou des gouvernes du drone et un couple comprenant un premier terme de cap ou route et un second terme d'altitude ou de pente, ledit élément étant sélectionné parmi l'ensemble d'éléments en fonction du mode sélectionné.

4. Système électronique de télé-pilotage (3) de drones selon l'une des revendications précédentes, comprenant une deuxième base de données (35) de terrain et/ou d'obstacles et dans lequel l'unité de traitement (33) est adaptée pour actualiser une localisation d'atterrissage d'urgence du drone à adopter par le drone sur détection de coupure de la liaison de télécommunication entre le système et le drone en fonction de données de terrain et/ou d'obstacles de la deuxième base, de données de définition de limite(s) de zone de vol autorisée de la première base, de la localisation géographique du drone indiquée par des informations de situation courante et d'un écart maximum fixé, en temps ou distance, de rejointe de la localisation d'atterrissage d'urgence, l'unité de traitement (33) étant adaptée pour transmettre au drone (2) via la première interface de télécommunication (34) la localisation d'atterrissage d'urgence actualisée.

5. Procédé de télé-pilotage (3) de drones (2) mis en oeuvre dans un système électronique de télé-pilotage de drones, comprenant les étapes suivantes :
- établissement d'une liaison de télécommunication (4) avec un drone (2) ;
- réception de commandes de télé-pilotage du drone ;
- réception, via la liaison de télécommunication (4), d'informations de situation courante du drone en provenance du drone indiquant au moins sa localisation géographique le procédé comprenant les étapes de :
- détection d'un risque de franchissement de limite de zone de vol autorisée en fonction de données de définition de limite(s) de zone de vol autorisée extraites d'une première base de données (36) comprenant des données de définition de limite(s) de zone de vol autorisée et d'au moins un premier élément parmi des informations de situation courante reçues et une première commande de télé-pilotage reçue destinée à être transmise au drone par le système de télé-pilotage; et
- suite à ladite détection, réalisation d'au moins une première opération parmi un ensemble d'opérations comprenant :
∘ déclenchement d'une alarme en fonction de la détermination d'une situation de franchissement de limite, ladite situation de franchissement de limite étant déterminée en fonction de ladite première commande de pilotage et d'une extrapolation dans le temps d'un pilotage conforme à ladite première commande ;
∘ le blocage de la transmission au drone de la première commande de télé-pilotage reçue via la seconde interface pour empêcher le franchissement de limite de zone de vol, le procédé étant **caractérisé en ce qu'**il comprend en outre les étapes de :
- extraction des informations de situation courante du drone en provenance du drone, une première localisation géographique du drone issue d'un premier dispositif de localisation du drone et une deuxième localisation géographique du drone issue d'un deuxième dispositif de localisation d'un outil de gardiennage virtuel embarqué dans le drone,
- comparaison des première et deuxième localisations géographiques et détection d'un écart supérieur à un seuil déterminé entre lesdites localisations géographiques comparées, et
- déclenchement d'une alerte destinée au télé-pilote lorsqu'un tel écart supérieur à un seuil déterminé a été détecté.

6. Procédé de télé-pilotage (3) de drones selon la revendication 5, comprenant une étape de sélection d'un mode parmi plusieurs mode de fonctionnement, une détermination d'une deuxième commande de télé-pilotage destinée au drone pour empêcher le franchissement de limite de zone de vol suite à ladite détection et comprenant selon le mode sélectionné au moins la détermination de l'un des éléments parmi l'ensemble d'éléments comprenant les coordonnées géographiques d'un futur point de passage du drone, une consigne de fonctionnement de moteurs et/ou des gouvernes du drone et un couple comprenant un premier terme de cap ou route et un second terme d'altitude ou de pente, ledit élément étant sélectionné parmi l'ensemble d'éléments en fonction du mode sélectionné.

7. Procédé de télé-pilotage (3) de drones selon la revendication 5 ou 6, comprenant les étapes de :
- actualisation d'une localisation d'atterrissage d'urgence du drone à adopter par le drone sur détection de coupure de la liaison de télécommunication entre le système et le drone en fonction de données de terrain et/ou d'obstacles d'une deuxième base de données (35) de terrain et/ou d'obstacles, de données de définition de limite(s) de zone de vol autorisée de la première base, de la localisation géographique du drone indiquée par des informations de situation courante et d'un écart maximum fixé, en temps ou distance, de rejointe de la localisation d'atterrissage d'urgence et
- transmission au drone de la localisation d'atterrissage d'urgence actualisée.

8. Programme d'ordinateur comportant des instructions logicielles qui, lorsqu'elles sont exécutées par un ordinateur, mettent en oeuvre un procédé selon l'une quelconque des revendications 5 à 7.

## Patentansprüche

1. Elektronisches System zur Fernsteuerung (3) von Drohnen (2), umfassend:
- eine erste Telekommunikationsschnittstelle (34) zum Aufbau einer Telekommunikationsverbindung (4) mit einer Drohne (2);
- eine zweite Schnittstelle (30) zum Empfangen von Befehlen zur Fernsteuerung der Drohne;
- eine erste Datenbank (36), die Daten zur Definition der Grenze(n) des erlaubten Flugbereichs enthält;
- eine Verarbeitungseinheit (33), die angepasst ist, um über die erste Schnittstelle Fernsteuerungsbefehle der Drohne, die über die zweite Schnittstelle empfangen wurden, an die Drohne zu übertragen, und die angepasst ist, um über die erste Schnittstelle aktuelle Statusinformationen der Drohne von der Drohne zu empfangen, die zumindest ihren geografischen Standort angeben;
wobei die Verarbeitungseinheit angepasst ist, um ein Risiko der Überschreitung einer Grenze des erlaubten Flugbereichs in Abhängigkeit von Daten zur Definition der Grenze(n) des erlaubten Flugbereichs, die aus der ersten Datenbank extrahiert werden, und von mindestens einem ersten Element der über die zweite Schnittstelle empfangenen aktuellen Situationsinformationen und eines über die zweite Schnittstelle empfangenen ersten Fernsteuerungsbefehls zu erfassen und um infolge der Erkennung mindestens eine erste Operation aus einem Satz von Operationen durchzuführen, der Folgendes umfasst:
- Auslösen eines Alarms in Abhängigkeit von der Bestimmung einer Grenzüberschreitungssituation, wobei die Grenzüberschreitungssituation in Abhängigkeit von dem ersten Steuerbefehl und einer Extrapolation einer Steuerung gemäß dem ersten Befehl über die Zeit bestimmt wird;
- das Blockieren der Übertragung des über die zweite Schnittstelle empfangenen ersten Fernsteuerungsbefehls an die Drohne, um das Überschreiten der Flugbereichsgrenze zu verhindern, **dadurch gekennzeichnet, dass** die Verarbeitungseinheit (33) für das Extrahieren von Informationen über die aktuelle Situation der Drohne aus der Drohne ausgelegt ist, eine erste geografische Lokalisierung der Drohne, die von einer ersten Lokalisierungsvorrichtung der Drohne stammt, und eine zweite geografische Lokalisierung der Drohne, die von einer zweiten Lokalisierungsvorrichtung eines an Bord der Drohne befindlichen virtuellen Wächterwerkzeugs stammt, um die erste und die zweite geografische Lokalisierung zu vergleichen, um eine Abweichung oberhalb eines bestimmten Schwellenwerts zwischen den verglichenen geografischen Lokalisierungen zu erkennen, wobei die Verarbeitungseinheit (33) außerdem das virtuelle Wächterwerkzeug (31) und einen elektronischen Block für Steuerung und Bodenkontrolle (32) umfasst, wobei das virtuelle Wächterwerkzeug (31) angepasst ist, um einen für den Telepiloten bestimmten Alarm auszulösen, wenn eine solche Abweichung oberhalb eines bestimmten Schwellenwerts erkannt worden ist.

2. Elektronisches System zur Fernsteuerung (3) von Drohnen nach Anspruch 1, wobei die Verarbeitungseinheit dazu ausgelegt ist, infolge der Erkennung einen zweiten Fernsteuerungsbefehl für die Drohne zu bestimmen, um das Überschreiten der Flugbereichsgrenze zu verhindern;
und automatisch von dem zweiten Befehl an die Drohne weiterleiten.

3. Elektronisches System zur Fernsteuerung (3) von Drohnen nach Anspruch 1 oder 2, bei dem die Verarbeitungseinheit (33) dazu ausgelegt ist, einen von mehreren Betriebsmodi auszuwählen, wobei die Bestimmung des zweiten Fernsteuerungsbefehls je nach ausgewähltem Modus mindestens die Bestimmung eines der Elemente aus der Gruppe von Elementen umfasst, die die geografischen Koordinaten eines zukünftigen Wegpunkts der Drohne, einen Betriebsbefehl für die Motoren und/oder die Steuerflächen der Drohne und ein Drehmoment mit einer ersten Angabe für den Kurs oder die Route und einer zweiten Angabe für die Höhe oder die Steigung umfasst, wobei das genannte Element aus dem Satz von Elementen in Abhängigkeit von dem ausgewählten Modus ausgewählt wird.

4. Elektronisches System zur Fernsteuerung (3) von Drohnen nach einem der vorhergehenden Ansprüche, das eine zweite Datenbank (35) mit Gelände- und/oder Hindernisdaten umfasst und bei dem die Verarbeitungseinheit (33) geeignet ist, um einen Notlandeort der Drohne zu aktualisieren, der von der Drohne bei Erkennung einer Unterbrechung der Telekommunikationsverbindung zwischen dem System und der Drohne in Abhängigkeit von Gelände- und/oder Hindernisdaten der zweiten Datenbank zu übernehmen ist, von Daten zur Definition der Grenze(n) des erlaubten Flugbereichs der ersten Basis, vom geografischen Standort der Drohne, der durch aktuelle Situationsinformationen angezeigt wird, und einer festgelegten maximalen Zeit- oder Entfernungsabweichung vom Erreichen des Notlandeortes, wobei die Verarbeitungseinheit (33) so ausgelegt ist, dass sie den aktualisierten Notlandeort über die erste Telekommunikationsschnittstelle (34) an die Drohne (2) überträgt.

5. Verfahren zur Fernsteuerung (3) von Drohnen (2), das in einem elektronischen System zur Fernsteuerung von Drohnen implementiert wird und folgende Schritte enthält:
- Aufbau einer Telekommunikationsverbindung (4) mit einer Drohne (2);
- Empfangen von Befehlen zur Fernsteuerung der Drohne;
- Empfangen, über die Telekommunikationsverbindung (4), von Informationen über die aktuelle Situation der Drohne von der Drohne, die zumindest ihren geografischen Standort angibt, wobei das Verfahren die folgenden Schritte umfasst:
- Erkennen eines Risikos der Überschreitung der Grenze eines erlaubten Flugbereichs in Abhängigkeit von Daten zur Definition der Grenze(n) des erlaubten Flugbereichs, die aus einer ersten Datenbank (36) extrahiert werden, die Daten zur Bestimmung der Grenze(n) des erlaubten Flugbereichs enthält und von mindestens einem ersten Element der empfangenen aktuellen Situationsinformationen und eines ersten Fernsteuerungsbefehls, der von dem Fernsteuersystem an die Drohne übertragen werden soll.
- im Anschluss an die Erkennung Durchführung mindestens eines ersten Vorgangs aus einem Satz von Vorgängen, der Folgendes umfasst:
∘ Auslösen eines Alarms in Abhängigkeit von der Bestimmung einer Grenzüberschreitungssituation, wobei die Grenzüberschreitungssituation in Abhängigkeit von dem ersten Steuerbefehl und einer zeitlichen Extrapolation einer Steuerung gemäß dem ersten Befehl bestimmt wird;
∘ das Blockieren der Übertragung des über die zweite Schnittstelle empfangenen ersten Fernsteuerungsbefehls an die Drohne, um das Überschreiten der Flugbereichsgrenze zu verhindern,
**dadurch gekennzeichnet, dass** das Verfahren ferner folgende Schritte umfasst:
- Extraktion von Informationen über die aktuelle Situation der Drohne aus der Drohne, eine erste geografische Lokalisierung der Drohne aus einer ersten Lokalisierungsvorrichtung der Drohne und eine zweite geografische Lokalisierung der Drohne aus einer zweiten Lokalisierungsvorrichtung eines virtuellen Wächterwerkzeugs an Bord der Drohne,
- Vergleich der ersten und zweiten geografischen Lokalisierung und Erkennung einer Abweichung zwischen den verglichenen geografischen Lokalisierungen, die größer als ein bestimmter Schwellenwert ist, und
- Auslösen einer Warnung, die für den Telepiloten bestimmt ist, wenn eine solche Abweichung über einem bestimmten Schwellenwert festgestellt wurde.

6. Verfahren zur Fernsteuerung (3) von Drohnen nach Anspruch 5, umfassend einen Schritt zur Auswahl eines Modus aus mehreren Betriebsmodi, eine Bestimmung eines zweiten Fernsteuerungsbefehls für die Drohne, um das Überschreiten der Flugbereichsgrenze infolge der Erkennung zu verhindern, und je nach ausgewählter Betriebsart mit mindestens der Bestimmung eines der Elemente, aus einer Gruppe von Elementen, die die geografischen Koordinaten eines zukünftigen Wegpunkts der Drohne, einen Betriebsbefehl für die Motoren und/oder Steuerflächen der Drohne und ein Drehmoment mit einer ersten Angabe für den Kurs oder die Route und einer zweiten Angabe für die Höhe oder die Steigung umfasst, wobei das Element aus dem Satz von Elementen in Abhängigkeit von dem ausgewählten Modus ausgewählt wird.

7. Verfahren zur Fernsteuerung (3) von Drohnen nach Anspruch 5 oder 6, das die folgenden Schritte umfasst:
- Aktualisierung eines Notlandeortes der Drohne, der von der Drohne bei Erkennung einer Unterbrechung der Telekommunikationsverbindung zwischen dem System und der Drohne anzunehmen ist, in Abhängigkeit von Gelände- und/oder Hindernisdaten einer zweiten Gelände- und/oder Hindernisdatenbank (35), von Daten zur Definition des erlaubten Flugbereichs aus der ersten Datenbank, vom geografischen Standort der Drohne, der durch aktuelle Situationsinformationen angezeigt wird, und einer festgelegten maximalen Zeit- oder Entfernungsabweichung vom Erreichen des Notlandeortes, und
- Übermittlung des aktualisierten Notlandeortes an die Drohne.

8. Computerprogramm, umfassend Softwareanweisungen, die, wenn sie von einem Computer ausgeführt werden, ein Verfahren nach einem der Ansprüche 5 bis 7 implementieren.

## Claims

1. Electronic system (3) for the remote control of drones (2), comprising:
- a first telecommunication interface (34) for establishing a telecommunication link (4) with a drone (2) ;
- a second interface (30) for receiving remote control commands for the drone;
- a first database (36) comprising authorized flight zone limit definition data;
- a processing unit (33) designed to transmit to the drone, via the first interface, commands for remote control of the drone received via the second interface and designed to receive, via the first interface, information on the current status of the drone, wherein the origin of the drone indicates at least its geographical location;
the processing unit being designed to detect a risk of passing beyond the authorized flight zone limit according to the authorized flight zone limit definition data as extracted from the first database and from at least one element of the current received status information and a first remote control command received via the second interface and, following this detection, perform at least the first of a set of operations comprising:
- triggering an alarm following the determination of a limit-passing situation, wherein the limit-passing situation is determined, as a function of the first control command and extrapolation over time of a control in accordance with the first command;
- the blocking of the transmission to the drone of the first remote control command received via the second interface in order to prevent the drone passing the flight zone limit,
**characterized in that** the processing unit (33) is designed to extract current status information of the drone from the drone, wherein a first geographical location of the drone results from a first device for locating the drone, while a second geographical location of the drone results from a second device for locating a virtual geofencing tool on-board the drone, in order to compare the first and second locations and to detect a difference greater than a determined threshold between the geographical locations compared,
the processing unit (33) comprising the virtual geofencing tool (31) and an electronic ground control and command unit (32),
the virtual geofencing tool (31) being adapted to trigger an alert for the remote pilot when such a difference greater than a determined threshold has been detected.

2. Electronic system (3) for the remote control of drones according to claim 1, wherein the processing unit is designed, following the detection, to determine a second remote control command for the drone to prevent the passing of the flight zone limit;
and automatically transmit the second command to the drone.

3. Electronic system (3) for the remote control of drones according to claim 1, wherein the processing unit (33) is designed to select a mode from among several modes of operation, wherein the determination of the second command of the remote control comprises, according to the mode selected, at least the determination of one of the elements comprising the geographical coordinates of a future passage point of the drone, an operating instruction for the motors and/or control surfaces of the drone and a couple comprising a first heading or route term and a second altitude or slope term, wherein the element is selected from the assembly of elements as a function of the selected mode.

4. Electronic system (3) for the remote control of drones according to claim 1, comprising a second database (35) of terrain and/or obstacles, and wherein the processing unit (33) is designed to update an emergency landing location of the drone that is to be adopted by the drone upon detection of a break in the telecommunication link between the system and the drone based on terrain and/or obstacle data from the second database, authorized flight area limit definition data from the first database, the geographical location of the drone indicated by current status information and a fixed maximum distance, in time or distance, to reaching the emergency landing location, wherein the processing unit (33) is designed to transmit the updated emergency landing location to the drone (2) via the first telecommunication interface (34).

5. Method for the remote control (3) of drones (2) implemented in an electronic drone control system, comprising the following steps:
- establishment of a telecommunication link (4) with a drone (2);
- reception of drone control commands;
- reception, via the telecommunication link (4) of current status information of the drone coming from the drone and indicating at least its geographical location, wherein the method comprises the steps of:
- detection of the risk of the drone passing an authorized flight zone limit based on authorized flight zone limit definition data extracted from a first database (36) comprising authorized flight zone limit definition data and at least a first element from current status information received and a first remote control command received that is intended to be transmitted to the drone by the remote control system; and,
- following the detection, performing at least a first operation among an assembly of operations comprising:
∘ triggering an alarm according to the determination of a limit-passing status, wherein the limit-passing status is determined as a function of the first control command and extrapolation over time of control according to the first command;
∘ blocking the transmission to the drone of the first remote control command received via the second interface to prevent the passing of the flight zone limit,
the method being **characterized in that** it further comprises the steps of:
- extraction of the current status information of the drone coming from the drone, a first geographical location of the drone coming from a first device for locating the drone, and a second geographical location of the drone coming from a second device for locating a drone through a virtual geofencing tool on board the drone,
- comparison of the first and second geographic locations and detection of a difference greater than a determined threshold between the geographical locations compared, and
- triggering an alert for the remote pilot when such a difference greater than a determined threshold has been detected.

6. Method for the remote control (3) for drones according to claim 5, comprising a step of selecting a mode from among several modes of operation, determination of a second remote control command for the drone to prevent the drone passing beyond the flight zone limit following the detection, and comprising, according to the selected mode, at least the determination of one of the assembly of elements comprising the geographical coordinates of a future passage point of the drone, set point operation of the motors and/or control surfaces of the drone, and a couple comprising a first heading or course term and a second altitude or slope term, wherein the element is selected from the assembly of elements according to the selected mode.

7. Method for the remote control (3) drones according to claim 5 or 6, comprising the steps of:
- updating an emergency landing location of the drone to be adopted by the drone upon detection of a break in the telecommunication link between the system and the drone based on terrain and/or obstacle data from a second terrain and/or obstacle database (35), authorized flight zone limit definition data from the first database, the geographical location of the drone indicated by current status information and a maximum deviation, in time or distance, from the emergency landing location and
- transmission to the drone of the updated emergency landing location.

8. Computer program comprising software instructions which, when executed by a computer, implement a method according to any of the claims 5 to 7.
